# EUROPÄISCHE PATENTSCHRIFT

(11) **EP 2 697 984 B1**
(45) Veröffentlichungstag und Bekanntmachung des Hinweises auf die Patenterteilung: **06.05.2015**
(21) Anmeldenummer: 12711109.4
(22) Anmeldetag: 02.03.2012
(51) Int. Cl.: H04R 27/00, H04B 3/23, H04M 9/08

(54) **BIDIREKTIONALES KOMMUNIKATIONSSYSTEM UND VERFAHREN ZUR KOMPENSATION UNERWÜNSCHTER RÜCKKOPPLUNGEN IN DEM BIDIREKTIONALEN KOMMUNIKATIONSSYSTEM**
BIDIRECTIONAL COMMUNICATION SYSTEM, AND METHOD FOR COMPENSATING FOR UNDESIRED FEEDBACK IN THE BIDIRECTIONAL COMMUNICATION SYSTEM
SYSTÈME DE COMMUNICATION BIDIRECTIONNEL ET PROCÉDÉ DE COMPENSATION DE RÉTROACTIONS INDÉSIRABLES DANS CE SYSTÈME DE COMMUNICATION BIDIRECTIONNEL

(43) Veröffentlichungstag der Anmeldung: 19.02.2014
(73) Patentinhaber: Unify GmbH & Co. KG, 81379 München (DE)
(72) Erfinder: ALBERT, Elmar, 83026 Rosenheim (DE)
(74) Vertreter: Fritzsche, Thomas
(86) Internationale Anmeldenummer: PCT/EP2012/000957
(87) Internationale Veröffentlichungsnummer: WO 2013/127412

(56) Entgegenhaltungen:
- WO-A2-03/039115
- JP-A- 9 130 306
- REED M J ET AL: "Acoustic echo cancellation for stereophonic systems derived from pairwise panning of monophonic speech", IEE PROCEEDINGS: VISION, IMAGE AND SIGNAL PROCESSING, INSTITUTION OF ELECTRICAL ENGINEERS, GB, Bd. 152, Nr. 1, 28. Februar 2005 (2005-02-28), Seiten 122-128, XP006023464, ISSN: 1350-245X, DOI: 10.1049/IP-VIS:20051178

## Beschreibung

Die vorliegende Erfindung betrifft ein bidirektionales Kommunikationssystem mit Kompensation unerwünschter Rückkopplungen sowie ein Verfahren zur Kompensation unerwünschter Rückkopplungen in einem bidirektionalen Kommunikationssystem gemäß dem Oberbegriff des Anspruchs 1 bzw. des Anspruchs 8.

Bei räumlich bzw. örtlich getrennten bidirektionalen Kommunikationseinrichtungen kommt es wegen unerwünschter Rückkopplungen der Empfangssignale, welche von Ausgabeeinrichtungen in der Kommunikationseinrichtung ausgegeben werden, auf die Eingabeeinrichtung(en) der Kommunikationseinrichtung zu Störungen der Signale in Senderichtung. In Fällen, in denen eine Ausgabeeinrichtung und eine Eingabeeinrichtung ein und derselben bidirektionalen Kommunikationseinrichtung zugeordnet sind, kann die Kompensation in der jeweils zugehörigen Kompensationseinheit durchgeführt werden, wodurch die Störung aus dem Sendesignal entfernt werden kann. Wird jedoch ein Signal, das von einer Ausgabeeinrichtung einer bidirektionalen Kommunikationseinrichtung ausgegeben wird, welche keine eigene Eingabeeinrichtung aufweist, auf eine Eingabeeinrichtung eingekoppelt, die sich in einer räumlich getrennten bzw. räumlich getrennt angeordneten bidirektionalen Kommunikationseinrichtung befindet, so kann diese Störung nicht aus dem Sendesignal der betreffenden bidirektionalen Kommunikationseinrichtung entfernt werden.

Als Beispiel für den Einsatz der vorliegenden Erfindung wird nachfolgend von einem Lautsprechersystem oder auch einem sogenannten Speaker Module ausgegangen, bei dem mindestens einer Kompensationseinheit nur ein Lautsprecher als Ausgabeeinheit zugeordnet ist, jedoch kein Mikrofon als Eingabeeinheit. Es versteht sich von selbst, dass die vorliegende Erfindung auch auf beliebige andere Konstellationen anwendbar ist, bei denen weniger Mikrofone als Lautsprecher vorhanden sind. Außerdem ist festzuhalten, dass die vorliegende Erfindung nicht nur auf die Echokompensation bei Audiosystemen anwendbar ist, sondern auch in analoger Weise bei beispielsweise optischen Systemen eingesetzt werden kann, sofern es dort zu unerwünschten Rückkopplungen kommt.

Um bei den eingangs erläuterten Systemen eine Kompensation unerwünschter Rückkopplungen vornehmen zu können, ist es bekannt, diese Kompensation durch eine zentrale Einheit vornehmen zu lassen, an die alle der betreffenden Teilsysteme angeschlossen sind. Dies ist jedoch aufwendig und teuer.

In REED M J ET AL: "Acoustic echo cancellation for stereophonic systems derived from pairwise panning of monophonic speech", IEE PROCEEDINGS: VISION, IMAGE AND SIGNAL PROCESSING, INSTITUTION OF ELECTRICAL ENGINEERS; GB, Bd. 152, Nr. 1, 28. Februar 2005 (2005-02-28), Seiten 122-128, XP006023464, ISSN: 1350-245X, DOI: 10.1049/IP-VIS:20051178 ist ein Algorithmus beschrieben, der eine stereophone akustische Echoauslöschung für Systeme ausführt, die ein paarweises Schwenken einer einzelnen monophonen Quelle verwenden, um den Effekt einer Verräumlichung zur Verfügung zu stellen. Die Technik nutzt die inhärent hohe Korrelation zwischen den Lautsprechersignalen im Unterschied zu anderen allgemeinen Techniken zur stereophonen akustischen Echoauslöschung, die versuchen, sämtliche kleinen unkorrelierten Merkmale in den Signalen zu verwenden.

Der vorliegenden Erfindung liegt die Aufgabe zugrunde, ein bidirektionales Kommunikationssystem mit Kompensation unerwünschter Rückkopplungen sowie ein Verfahren zur Kompensation unerwünschter Rückkopplungen in einem bidirektionalen Kommunikationssystem anzugeben, womit derartige unerwünschte Rückkopplungen in einfacher und kostengünstiger Weise beseitigt werden können.

Diese Aufgabe wird mit einem bidirektionalen Kommunikationssystem gemäß Anspruch 1 sowie einem Verfahren zur Kompensation unerwünschter Rückkopplungen gemäß Anspruch 8 gelöst. Vorteilhafte Weiterbildungen der Erfindung sind Gegenstand der abhängigen Ansprüche.

Erfindungsgemäß umfasst ein bidirektionales Kommunikationssystem, bei dem eine Kompensation unerwünschter Rückkopplungen vorgenommen werden kann, eine erste Kompensationseinheit sowie mindestens eine zweite Kompensationseinheit, also zwei oder mehrere zweite Kompensationseinheiten. Die erste Kompensationseinheit ist mit einer ersten Ausgabeeinheit und einer ersten Eingabeeinheit zur Signalübertragung verbunden, und sie kann eine Kompensation unerwünschter Rückkopplungen von der ersten Ausgabeeinheit in die erste Eingabeeinheit ausführen, indem sie erste Kompensationsdaten generiert und zur Kompensation der unerwünschten Rückkopplungen benutzt, wobei durch die Kompensation eine von den Rückkopplungen verursachte Störung aus einem Sendesignal der ersten Eingabeeinheit entfernbar ist. Jede zweite Kompensationseinheit ist ähnlich oder sogar gleich aufgebaut wie die erste Kompensationseinheit und ist räumlich getrennt von der ersten Kompensationseinheit angeordnet. "Räumlich getrennt" bedeutet, dass ein bestimmter räumlicher Abstand zwischen den zwei Kompensationseinheiten vorhanden ist und diese beiden Einheiten nicht auf dem gleichen Chip oder der gleichen Platine montiert und miteinander verschaltet sind. Im Gegensatz zur ersten Kompensationseinheit ist jede zweite Kompensationseinheit nur mit einer Ausgabeeinheit zur Signalübertragung verbunden, ohne jedoch mit einer Eingabeeinheit verbunden zu sein. Die Erfindung zeichnet sich dadurch aus, dass sowohl die erste als auch die mindestens eine zweite Kompensationseinheit mit je einer Schnittstelle verbunden oder ausgerüstet sind, über welche die von der ersten Kompensationseinheit generierten ersten Kompensationsdaten an die mindestens eine zweite Kompensationseinheit übermittelt werden können, damit in der jeweiligen zweiten Kompensationseinheit entsprechende zweite Kompensationsdaten generiert werden können, um eine Kompensation der von der zweiten Ausgabeeinheit bei der ersten Eingabeeinheit erzeugten unerwünschten Rückkopplungen durchführen zu können.

Mit einem derartigen bidirektionalen Kommunikationssystem können unerwünschte Rückkopplungen beseitigt werden, ohne dass außerhalb dieses Kommunikationssystems, beispielsweise auf der Systemseite, Maßnahmen zur Beseitigung dieser Störungen getroffen werden müssen. Diese Lösung ist einfach und kostengünstig zu realisieren.

Gemäß einer bevorzugten Ausführungsform der Erfindung ist die erste Kompensationseinheit in einer ersten bidirektionalen Kommunikationseinrichtung wie beispielsweise einem Lautsprechersystem angeordnet, und die bzw. jede zweite Kompensationseinheit ist in einer zweiten bidirektionalen Kommunikationseinrichtung angeordnet, die räumlich getrennt von der ersten Kommunikationseinrichtung ist. Damit kann auch bei derartig verteilt angeordneten Systemen in einfacher Weise sichergestellt werden, dass die Beseitigung unerwünschter Rückkopplungen problemlos möglich ist.

Es kann von Vorteil sein, wenn die Schnittstelle der ersten Kompensationseinheit nicht nur für den Empfang der ersten Kompensationsdaten, sondern auch für den Empfang von Steuerinformationen ausgelegt und so ausgestaltet ist, dass sie die Kompensation automatisch veranlassen kann. Hierbei kann es besonders günstig sein, die Kompensation auf der Basis einer automatischen Mustererkennung der in der ersten Kompensationseinheit vorhandenen Signale ausführen zu lassen. Diese automatische Mustererkennung kann mit Vorteil auch in selbstlernender Weise erfolgen. Somit kann das Ein- und Ausschalten der Kompensation über eine automatische Erkennung der in der ersten Kompensationseinheit vorhandenen Situation erfolgen. Wenn also ein bestimmtes Muster in diesen Signalen auftritt und erkannt wird, kann dann die Kompensation eingeschaltet werden. Alternativ ist es auch möglich, die Kompensation der unerwünschten Rückkopplungen durch ein entsprechendes Steuersignal, durch eine Voreinstellung oder durch eine Initialisierung vornehmen zu lassen. Dies ist beispielsweise günstig für ein Audiosystem bei räumlicher Trennung der einzelnen Lautsprechermodule. Die automatische Umschaltung kann dagegen in Fällen große Vorteile bringen, wenn mehrere Lautsprechersysteme relativ dicht beieinander angeordnet sind und unterschiedliche Benutzungssituationen auftreten können, was eine flexible Anpassung der Art und des Umfangs der Kompensation wünschenswert erscheinen lässt.

Die beiden zum Austausch bzw. der Übermittlung der Kompensationsdaten und deren "Zurückspiegelung" vorgesehenen Schnittstellen können mit Vorteil einerseits mittels Verbindungskabeln wie z. B. einem Standard-CAT-5-Kabel unter Verwendung von Ethernet, USB oder eines IOM-2-Interfaces verbunden sein. Andererseits kann diese Verbindung auch mittels WLAN oder DECT in drahtloser Technik ausgeführt sein.

Das erfindungsgemäße Verfahren zur Kompensation unerwünschter Rückkopplungen in einem solchen bidirektionalen Kommunikationssystem zeichnet sich dadurch aus, dass die von der ersten Kompensationseinheit erstellten ersten Kompensationsdaten über jeweilige Schnittstellen direkt an die mindestens eine zweite Kompensationseinheit übertragen werden und in der mindestens einen zweiten Kompensationseinheit zweite Kompensationsdaten zur Kompensation der von der zweiten Ausgabeeinheit bei der ersten Eingabeeinheit erzeugten unerwünschten Rückkopplungen erzeugt werden. Somit ist eine einfach und kostengünstig zu realisierende Beseitigung von Rückkopplungen möglich. Die in Verbindung mit dem bidirektionalen Kommunikationssystem beschriebenen Merkmale und Vorteile sind in analoger Weise auch für das Verfahren zutreffend und erfordern daher keine ausführliche Beschreibung.

Da die vorstehend mehrfach erwähnte Kompensation bzw. Beseitigung unerwünschter Rückkopplungen in an sich bekannter Weise erfolgt, bedarf es keiner detaillierten Erläuterung dieses Vorgangs.

Weitere Vorteile, Merkmale und Besonderheiten der vorliegenden Erfindung ergeben sich aus der nachfolgenden ausführlichen Beschreibung verschiedener Ausführungsformen der Erfindung. Es zeigen:
FIG. 1 eine erste Ausführungsform der vorliegenden Erfindung;
FIG. 2 eine zweite Ausführungsform der vorliegenden Erfindung;
FIG. 3 eine dritte Ausführungsform der vorliegenden Erfindung und
FIG. 4 ein bidirektionales Kommunikationssystem gemäß dem Stand der Technik.

Das erfindungsgemäße bidirektionale Kommunikationssystem kann beispielsweise in einem Trading-System eingesetzt werden, wie es an der Börse zum Handeln von Wertpapieren und Derivaten eingesetzt wird. Die Erfindung kann auch in Meldezentralen von Feuerwehren, Polizeistationen und Luftleitstellen eingesetzt werden.

Für die nachfolgende Beschreibung verschiedener Ausführungsformen der Erfindung wird ein Lautsprechermodul als Beispiel für das bidirektionale Kommunikationssystem herangezogen, wobei die Erfindung selbstverständlich nicht hierauf beschränkt ist.

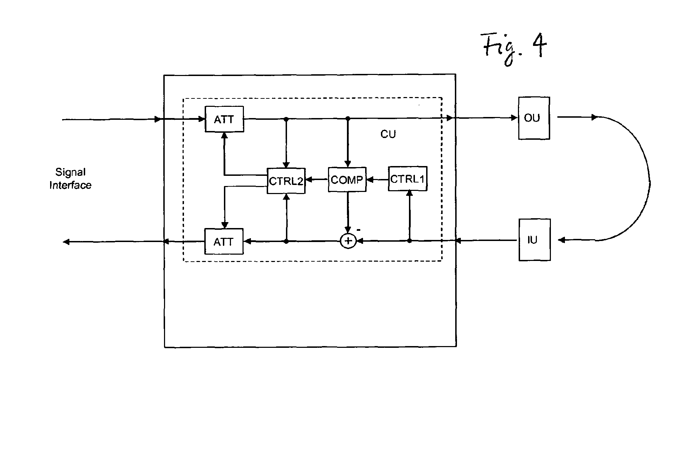

Zunächst sei ein Lautsprechermodul betrachtet, wie es aus dem Stand der Technik bekannt und in FIG. 4 schematisch dargestellt ist. Über ein Signal-Interface wird ein Signal in eine Kompensationseinheit CU eingespeist, die daraus ein Signal für einen Lautsprecher OU erzeugt. Der vom Lautsprecher OU erzeugte Schall kann dabei in ein Mikrofon IU des Lautsprechermoduls gelangen und eine (unerwünschte) Rückkopplung erzeugen. Diese Rückkopplung wird durch die Kompensationseinheit CU in an sich bekannter Weise beseitigt. Sofern ein weiteres Lautsprechermodul, das zu diesem bidirektionalen Kommunikationssystem gehört, zwar einen Lautsprecher umfasst, jedoch kein zugehöriges Mikrofon, kann eine Rückkopplung, welche dieser Lautsprecher bei dem Mikrofon IU der Kompensationseinheit CU verursacht, nicht beseitigt werden, da diesem Lautsprecher kein zur Kompensation dienendes Mikrofon zugeordnet ist.

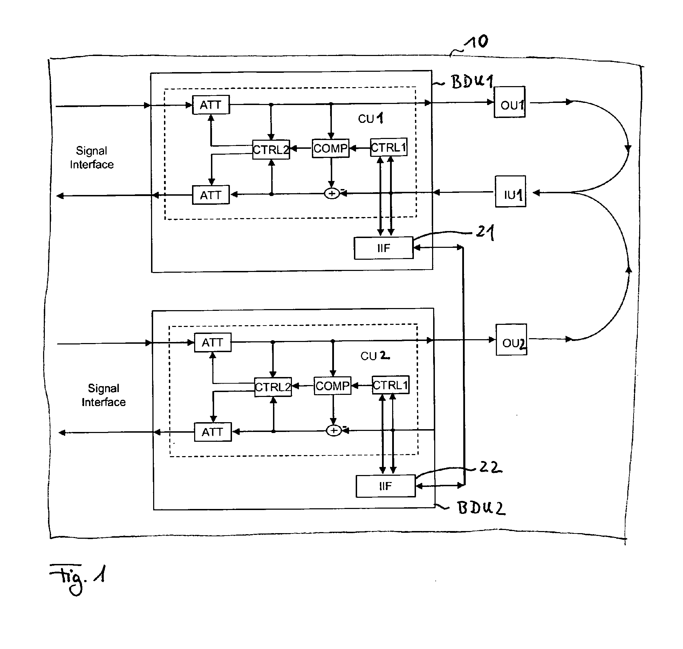

Erfindungsgemäß ist eine Kompensation einer unerwünschten Rückkopplung bei einem bidirektionalen Kommunikationssystem 10 gemäß FIG. 1 in folgender Weise möglich. Dieses bidirektionale Kommunikationssystem 10 umfasst eine erste bidirektionale Kommunikationseinrichtung BDU1 sowie eine zweite bidirektionale Kommunikationseinrichtung BDU2. Die erste Kommunikationseinrichtung BDU1 enthält eine erste Kompensationseinheit CU1, der ein erster Lautsprecher OU1 und ein erstes Mikrofon IU1 zugeordnet sind. Die zweite Kommunikationseinrichtung BDU2 enthält eine zweite Kompensationseinheit CU2, der zwar ein zweiter Lautsprecher OU2, jedoch keinerlei Mikrofon zugeordnet ist.

Sowohl der aus dem ersten Lautsprecher OU1 als auch der aus dem zweiten Lautsprecher OU2 ausgegebene Schall gelangt in das erste Mikrofon IU1. Die dadurch entstehende Rückkopplung wird in der ersten Kompensationseinheit CU1 für die erste Kommunikationseinrichtung BDU1 kompensiert, indem erste Kompensationsdaten erzeugt und zur Kompensation verwendet werden. Diese ersten Kompensationsdaten werden an eine erste Schnittstelle 21 übertragen, die in der ersten Kommunikationseinrichtung BDU1 angeordnet und mit der ersten Kompensationseinheit CU1 verbunden ist. Diese erste Schnittstelle 21 ist z.B. als sogenanntes Interconnection-Interface IIF ausgebildet, das so ausgelegt ist, dass es die ersten Kompensationsdaten an eine zweite Schnittstelle 22 übertragen kann, die ähnlich oder sogar gleich wie die erste Schnittstelle 21 ausgebildet ist und in der zweiten Kommunikationseinrichtung BDU2 angeordnet und mit der zweiten Kompensationseinheit CU2 verbunden ist. Die an die zweite Schnittstelle 22 übertragenen ersten Kompensationsdaten können dazu verwendet werden, um in der zweiten Kompensationseinheit CU2 zweite Kompensationsdaten zu erzeugen, mit deren Hilfe die im ersten Mikrofon IU1 vom zweiten Lautsprecher OU2 erzeugte Rückkopplung kompensiert werden kann. Die Verbindung zwischen den zwei Schnittstellen 21 und 22 ist hier nur schematisch dargestellt und kann beispielsweise als Drahtlosverbindung über WLAN oder DECT ausgestaltet sein.

Auf diese Weise kann die am ersten Mikrofon IU1 erzeugte Rückkopplung beseitigt werden, ohne dass außerhalb des bidirektionalen Kommunikationssystems 10 entsprechende Maßnahmen getroffen werden müssten.

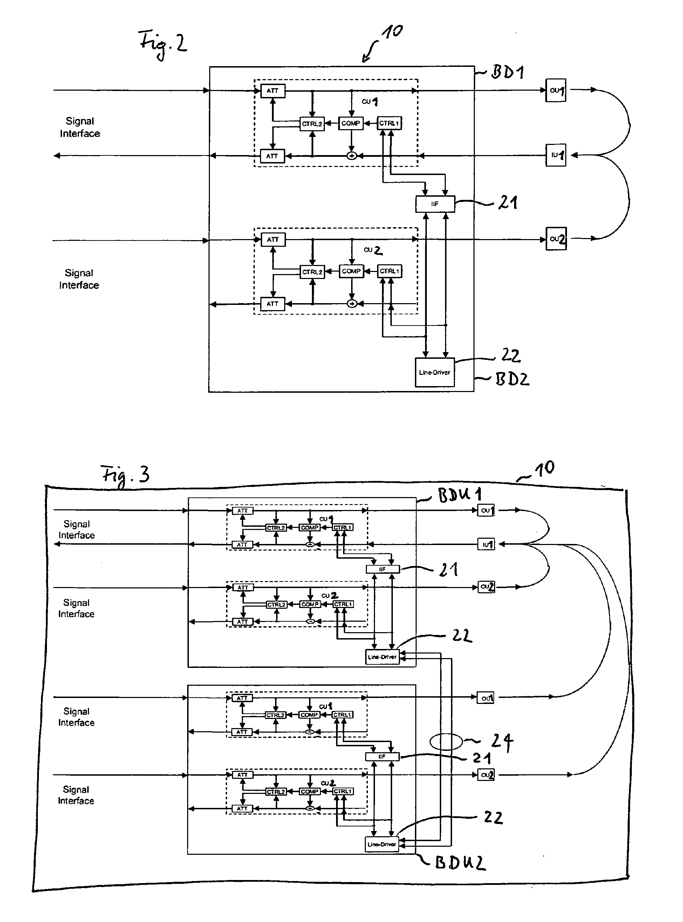

Eine zweite Ausführungsform der vorliegenden Erfindung ist in FIG. 2 gezeigt. Zur Vermeidung überflüssiger Wiederholungen werden nachstehend bei dieser zweiten Ausführungsform sowie der dritten Ausführungsform überwiegend die Unterschiede zur ersten Ausführungsform beschrieben, wobei gleiche oder ähnliche Merkmale bzw. Schaltungseinheiten mit gleichen oder ähnlichen Bezugszeichen bezeichnet sind.

Im Gegensatz zur ersten Ausführungsform ist die erste Kommunikationseinrichtung BDU1 zusammen mit der zweiten Kommunikationseinrichtung BDU2 in einem einzigen Gerät angeordnet, obwohl die beiden Kommunikationseinrichtungen gesondert bezeichnet sind. Alternativ kann auch davon ausgegangen werden, dass die erste Kompensationseinheit CU1 und die zweite Kompensationseinheit CU2 in einer einzigen Kommunikationseinrichtung untergebracht sind. Die technische Funktionsweise der Erfindung wird hiervon jedoch nicht berührt. Im Unterschied zur ersten Ausführungsform ist bei dieser zweiten Ausführungsform die zweite Schnittstelle 22 anders als die erste Schnittstelle 21 - die als "intelligente" Elektronik ausgestaltet ist, welche beispielsweise für die Umschaltung zwischen Kompensation und Nicht-Kompensation verwendet werden kann - als "dumme Elektronik" für die Herstellung der Verbindung zur ersten Schnittstelle 21 sowie zur zweiten Kompensationseinheit CU2 ausgestaltet und dient als Treiber dieser Leitung bzw. der Schaltung. Die Kompensation der unerwünschten Rückkopplung am Mikrofon IU1 erfolgt in gleicher Weise wie bei der ersten Ausführungsform.

In FIG. 3 ist eine dritte Ausführungsform der Erfindung dargestellt, bei der in einer ersten Kommunikationseinrichtung BDU1 zwei Kompensationseinheiten CU1 und CU2 vorgesehen sind und die gleich ausgestaltet sind wie das in FIG. 2 gezeigte Kommunikationssystem 10.

Zusätzlich hierzu ist eine zweite Kommunikationseinrichtung BDU2 mit zwei Kompensationseinheiten CU1 und CU2 vorgesehen, denen jeweils nur ein Lautsprecher OU1 bzw. OU2 zugeordnet ist. Die erste Kompensationseinheit CU1 ist mit einer ersten Schnittstelle 21 verbunden, während die zweite Kompensationseinheit CU2 mit einer zweiten Schnittstelle 22 verbunden ist. Die beiden Schnittstellen 21 und 22 sind in gleicher Weise ausgebildet und verbunden wie bei der zweiten Ausführungsform. Die zweite Schnittstelle 22 der zweiten Kommunikationseinrichtung BDU2 ist mit der zweiten Schnittstelle 22 der ersten Kommunikationseinrichtung BDU1 über ein sogenanntes Interconnection-Interface-Kabel 24 verbunden, das beispielsweise als Standard-CAT-5-Kabel ausgestaltet ist. Über die beschriebenen Verbindungen können Kompensationsdaten, die in der ersten Kompensationseinheit CU1 der ersten Kommunikationseinrichtung BDU1 sowohl in die zweite Kompensationseinheit CU2 dieser ersten Kommunikationseinrichtung BDU1 als auch in die beiden Kompensationseinheiten CU1 und CU2 der zweiten Kommunikationseinrichtung BDU2 übertragen und dort zur Kompensation bzw. Beseitigung der Rückkopplung verwendet werden, die durch den Lautsprecher OU2 der ersten Kommunikationseinrichtung BDU1 sowie die beiden Lautsprecher OU1 und OU2 der zweiten Kommunikationseinrichtung BDU2 am ersten Mikrofon IU1 der ersten Kommunikationseinrichtung BDU1 erzeugt werden.

Es ist klar, dass weitere Ausführungsformen als zu der Erfindung gehörig anzusehen sind, die noch mehr Lautsprecher und/oder mehr Mikrofone als bei den zuvor beschriebenen Ausführungsformen aufweisen, sofern nicht jedem Lautsprecher ein Mikrofon zugeordnet ist. Die Kompensation der Rückkopplungen erfolgt jeweils in an sich bekannter Weise, vorzugsweise in Bausteinen, die als System-on-Chip (SoC) ausgebildet sind. Diese Bausteine enthalten in der Regel neben einer Steuer-CPU und weiterer sogenannter On-Chip-Hardware auch einen digitalen Signalprozessor (DSP). Die zuvor beschriebenen Funktionalitäten der Kompensationseinheiten werden in dem digitalen Signalprozessor realisiert.

Die beschriebenen Bausteine, die als System-on-Chip ausgebildet sind, können beispielsweise ein sogenanntes IOM-2-Interface bilden, das zum Verbinden von Signalpfaden zwischen verschiedenen SoCs verwendet werden kann. Dieses Interface beinhaltet gleichzeitig ein Protokoll sowie die physikalische Übertragung der Signale. Diese IOM-2-Interfaces können einen Teil einer Schnittstelle 21 (beispielsweise ausgebildet als Interconnection Interface bzw. IIF) oder 22 bilden.

Es ist festzuhalten, dass die unter Bezug auf die dargestellten Ausführungsformen beschriebenen Merkmale der Erfindung, wie beispielsweise die Art und Ausgestaltung der Schnittstellen und Verbindungen sowie die Zuordnung der Ein- und Ausgabeeinheiten, auch bei anderen Ausführungsformen vorhanden sein können, außer wenn es anders angegeben ist oder sich aus technischen Gründen von selbst verbietet.

## Patentansprüche

1. Bidirektionales Kommunikationssystem (10) mit Kompensation unerwünschter Rückkopplungen, umfassend
a) eine erste Kompensationseinheit (CU1), die mit einer ersten Ausgabeeinheit (OU1) und einer ersten Eingabeeinheit (IU1) zur Signalübertragung verbunden ist und die für eine Kompensation unerwünschter Rückkopplungen von der ersten Ausgabeeinheit (OU1) in die erste Eingabeeinheit (IU1) unter Erstellung von ersten Kompensationsdaten ausgelegt ist, wobei durch die Kompensation eine von den Rückkopplungen verursachte Störung aus einem Sendesignal der ersten Eingabeeinheit (IU1) entfernbar ist, und
b) mindestens eine zweite Kompensationseinheit (CU2), die analog wie die erste Kompensationseinheit (CU1) aufgebaut und räumlich getrennt von der ersten Kompensationseinheit (CU1) ist und die mit einer zweiten Ausgabeeinheit (OU2) zur Signalübertragung verbunden ist, ohne jedoch mit einer Eingabeeinheit verbunden zu sein,
**dadurch gekennzeichnet, dass**
c) sowohl die erste Kompensationseinheit (CU1) als auch die mindestens eine zweite Kompensationseinheit (CU2) jeweils mit einer Schnittstelle (21, 22) verbunden sind, über welche die von der ersten Kompensationseinheit (CU1) erstellten ersten Kompensationsdaten an die mindestens eine zweite Kompensationseinheit (CU2) zur Erstellung von zweiten Kompensationsdaten in der mindestens einen zweiten Kompensationseinheit (CU2) zur Kompensation der von der zweiten Ausgabeeinheit (OU2) bei der ersten Eingabeeinheit (IU1) erzeugten unerwünschten Rückkopplungen übertragbar sind.

2. Bidirektionales Kommunikationssystem (10) nach Anspruch 1,
**dadurch gekennzeichnet, dass** die erste Kompensationseinheit (CU1) in einer ersten bidirektionalen Kommunikationseinrichtung (BDU1) angeordnet und die zweite Kompensationseinheit (CU2) in einer zweiten bidirektionalen Kommunikationseinrichtung (BDU2) angeordnet ist, die räumlich getrennt von der ersten Kommunikationseinrichtung (BDU1) ist.

3. Bidirektionales Kommunikationssystem (10) nach Anspruch 1 oder 2,
**dadurch gekennzeichnet, dass** die Schnittstelle (21) der ersten Kompensationseinheit (CU1) für den Empfang der ersten Kompensationsdaten sowie von Steuerinformationen ausgelegt ist und so ausgestaltet ist, dass sie die Kompensation automatisch veranlassen kann.

4. Bidirektionales Kommunikationssystem (10) nach Anspruch 3,
**dadurch gekennzeichnet, dass** die Kompensation mittels automatischer Mustererkennung der in der ersten Kompensationseinheit (CU1) vorhandenen Signale ausführbar ist.

5. Bidirektionales Kommunikationssystem (10) nach Anspruch 4,
**dadurch gekennzeichnet, dass** die Kompensation selbstlernend ausführbar ist.

6. Bidirektionales Kommunikationssystem (10) nach einem der vorhergehenden Ansprüche,
**dadurch gekennzeichnet, dass** die Schnittstellen (21, 22) mittels Verbindungskabeln unter Verwendung von Ethernet, USB oder eines IOM-2-Interfaces oder drahtlos mittels WLAN oder DECT miteinander verbunden sind.

7. Bidirektionales Kommunikationssystem (10) nach einem der vorhergehenden Ansprüche,
**dadurch gekennzeichnet, dass** es als ein mit einem Mikrofon ausgestattetes Lautsprechersystem mit Echounterdrückung ausgebildet ist.

8. Verfahren zur Kompensation unerwünschter Rückkopplungen in einem bidirektionalen Kommunikationssystem (10), welches aufweist:
a) eine erste Kompensationseinheit (CU1), die mit einer ersten Ausgabeeinheit (OU1) und einer ersten Eingabeeinheit (IU1) zur Signalübertragung verbunden ist und die für eine Kompensation unerwünschter Rückkopplungen von der ersten Ausgabeeinheit (OU1) in die erste Eingabeeinheit (IU1) unter Erstellung von ersten Kompensationsdaten ausgelegt ist, wobei durch die Kompensation eine von den Rückkopplungen verursachte Störung aus einem Sendesignal der ersten Eingabeeinheit (IU1) entfernt werden kann, und
b) mindestens eine zweite Kompensationseinheit (CU2), die analog wie die erste Kompensationseinheit (CU1) aufgebaut und räumlich getrennt von der ersten Kompensationseinheit (CU1) ist und die mit einer zweiten Ausgabeeinheit (OU2) zur Signalübertragung verbunden ist, ohne jedoch mit einer Eingabeeinheit verbunden zu sein,
**dadurch gekennzeichnet, dass**
c) die von der ersten Kompensationseinheit (CU1) erstellten ersten Kompensationsdaten über jeweilige Schnittstellen (21, 22) direkt an die mindestens eine zweite Kompensationseinheit (CU2) übertragen werden und in der mindestens einen zweiten Kompensationseinheit (CU2) zweite Kompensationsdaten zur Kompensation der von der zweiten Ausgabeeinheit (OU2) bei der ersten Eingabeeinheit (IU1) erzeugten unerwünschten Rückkopplungen erzeugt werden.

9. Verfahren nach Anspruch 8,
**dadurch gekennzeichnet, dass** die Kompensation der Rückkopplungen jeweils in Bausteinen, die als System-on-Chip ausgebildet sind, erfolgt.

10. Verfahren nach Anspruch 9,
**dadurch gekennzeichnet, dass** die Bausteine, die als System-on-Chip ausgebildet sind, ein IOM-2-Interface bilden, das einen Teil der Schnittstelle (21), beispielsweise ausgebildet als Interconnection Interface, bildet.

## Claims

1. Bidirectional communication system (10) with compensation for undesired feedback, comprising
a) a first compensating unit (CU1), which is paired with a first output unit (OU1) and a first input unit (IU1) for signal transfer, and which is designed to compensate for undesired feedback from the first output unit (OU1) into the first input unit (IU1), while compiling first compensation data, wherein, due to the compensation, an interference caused by the feedback can be removed from a transmitted signal from the first input unit (IU1), and
b) at least one second compensating unit (CU2), which is designed as analogous to the first compensating unit (CU1), and is spatially separated from the first compensating unit (CU1), and is connected to a second output unit (OU2) for signal transfer, but without being connected to an input unit, **characterised in that**
c) both the first compensating unit (CU1) as well as the at least one second compensating unit (CU2) are each connected to an interface (21, 22), via which the first compensation data compiled by the first compensating unit (CU1) can be transmitted to the at least one second compensating unit (CU2) in order to generate second compensation data in the at least one second compensating unit (CU2) to compensate for the undesired feedback produced in the first input unit (IU1) by the second output unit (OU2).

2. Bidirectional communication system (10) according to claim 1, **characterised in that** the first compensating unit (CU1) is arranged in a first bidirectional communication device (BDU1) and the second compensating unit (CU2) is arranged in a second bidirectional communication device (BDU2), which is spatially separated from the first communication device (BDU1).

3. Bidirectional communication system (10) according to claim 1 or 2, **characterised in that** the interface (21) of the first compensating unit (CU1) is designed to receive the first compensation data and control information, and is equipped in such a way that it can automatically arrange the compensation.

4. Bidirectional communication system (10) according to claim 3, **characterised in that** the compensation can be carried out by means of automatic pattern recognition of the signals present in the first compensating unit (CU1).

5. Bidirectional communication system (10) according to claim 4, **characterised in that** the compensation can be carried out in a self-learning manner.

6. Bidirectional communication system (10) according to any one of the preceding claims, **characterised in that** the interfaces (21, 22) are connected to one another by means of connection cables making use of Ethernet, USB or an IOM-2 interface or wirelessly by means of WLAN or DECT.

7. Bidirectional communication system (10) according to any one of the preceding claims, **characterised in that** it is designed as a loudspeaker system equipped with a microphone, with echo suppression.

8. Method for compensating for undesirable feedback in a bidirectional communication system (10), comprising:
a) a first compensating unit (CU1), which is connected to a first output unit (OU1) and a first input unit (IU1) for the signal transfer, and which is designed for a compensation of undesirable feedback from the first output unit (OU1) into the first input unit (IU1) with the compiling of first compensation data, wherein, by the compensation, an interference caused by the feedback can be removed from a transmitted signal of the first input unit (IU1), and
b) at least one second compensating unit (CU2), which is designed analogously to the first compensating unit (CU1) and is spatially separated from the first compensating unit (CU1) and which is connected to a second output unit (OU2) for the signal transfer, but without being connected to an input unit, **characterised in that**
c) the first compensation data compiled by the first compensating unit (CU1) is transferred via respective interfaces (21, 22) directly to the at least one second compensating unit (CU2), and second compensation data is compiled in the at least one second compensating unit (CU2) for the compensation of the undesirable feedback produced by the second output unit (OU2) in the first input unit (IUI).

9. Method according to claim 8, **characterised in that** die compensation of the feedback takes place in each case in modules which are designed as system-on-chip units.

10. Method according to claim 9, **characterised in that** the modules, which are designed as system-on-chip units, form an IOM-2 interface which forms a part of the interface (21), designed, for example, as an interconnection Interface.

## Revendications

1. Système de communication bidirectionnel (10) avec compensation de rétroactions indésirables comportant :
a) une première unité de compensation (CU1) qui est reliée à une première unité de sortie (OU1) et à une première unité d'entrée (IU1) en vue de la transmission de signaux et qui est conçue pour une compensation de rétroactions indésirables de la première unité de sortie (OU1) dans la première unité d'entrée (IU1) à l'aide d'une génération de premières données de compensation, une perturbation causée par une des rétroactions pouvant être supprimée d'un signal d'émission de la première unité d'entrée (IU1) par le biais de la compensation, et
b) au moins une seconde unité de compensation (CU2) qui est constituée de manière analogue à la première unité de compensation (CU1), est séparée dans l'espace de la première unité de compensation (CU1) et est reliée à une seconde unité de sortie (OU2) en vue de la transmission de signaux, sans toutefois être reliée à une unité d'entrée,
**caractérisé en ce que**
c) aussi bien la première unité de compensation (CU1) que ladite au moins une seconde unité de compensation (CU2) sont reliées chacune à une interface (21, 22) par le biais de laquelle les premières données de compensation générées par la première unité de compensation (CU1) peuvent être transmises à ladite au moins une seconde unité de compensation (CU2) en vue de la génération de secondes données de compensation dans ladite au moins une seconde unité de compensation (CU2) en vue de la compensation des rétroactions indésirables produites par la seconde unité de sortie (OU2) au niveau de la première unité d'entrée (IU1).

2. Système de communication bidirectionnel (10) selon la revendication 1,
**caractérisé en ce que** la première unité de compensation (CU1) est disposée dans un premier dispositif de communication bidirectionnel (BDU1) et la seconde unité de compensation (CU2) est disposée dans un second dispositif de communication bidirectionnel (BDU2) qui est séparé dans l'espace du premier dispositif de communication (BDU1).

3. Système de communication bidirectionnel (10) selon la revendication 1 ou 2,
**caractérisé en ce que** l'interface (21) de la première unité de compensation (CU1) est conçue pour la réception des premières données de compensation ainsi que d'informations de commande et est agencée de sorte qu'elle puisse déclencher automatiquement la compensation.

4. Système de communication bidirectionnel (10) selon la revendication 3,
**caractérisé en ce que** la compensation peut être exécutée au moyen d'une reconnaissance automatique d'une combinaison dans les signaux présents dans la première unité de compensation (CU1).

5. Système de communication bidirectionnel (10) selon la revendication 4,
**caractérisé en ce que** la compensation peut être exécutée par auto-apprentissage.

6. Système de communication bidirectionnel (10) selon l'une quelconque des revendications précédentes,
**caractérisé en ce que** les interfaces (21, 22) sont reliées entre elles au moyen de câbles de liaison utilisant Ethernet, USB ou au moyen d'une interface IOM-2 ou sans fil au moyen de WLAN ou DECT.

7. Système de communication bidirectionnel (10) selon l'une quelconque des revendications précédentes,
**caractérisé en ce qu'**il est conçu sous forme d'un système de haut-parleurs avec suppression d'échos et équipé d'un microphone.

8. Procédé de compensation de rétroactions indésirables dans un système de communication bidirectionnel (10) qui comprend :
a) une première unité de compensation (CU1) qui est reliée à une première unité de sortie (OU1) et à une première unité d'entrée (IU1) en vue de la transmission de signaux et qui est conçue pour une compensation de rétroactions indésirables de la première unité de sortie (OU1) dans la première unité d'entrée (IU1) à l'aide de la génération de premières données de compensation, une perturbation causée par les rétroactions pouvant être supprimée d'un signal d'émission de la première unité d'entrée (IU1) par le biais de la compensation, et
b) au moins une seconde unité de compensation (CU2) qui est constituée de manière analogue à la première unité de compensation (CU1) et qui est séparée dans l'espace de la première unité de compensation (CU1) et qui est reliée à une seconde unité de sortie (OU2) en vue de la transmission de signaux, sans être toutefois reliée à une unité d'entrée,
**caractérisé en ce que**
c) les premières données de compensation générées par la première unité de compensation (CM) sont transmises par le biais d'interfaces respectives (21, 22) directement à ladite au moins une seconde unité de compensation (CU2) et **en ce que**, dans ladite au moins une seconde unité de compensation (CU2), des secondes données de compensation sont générées en vue de la compensation des rétroactions indésirables produites par la seconde unité de sortie (OU2) au niveau de la première unité d'entrée (IU1).

9. Procédé selon la revendication 8,
**caractérisé en ce que** la compensation des rétroactions est effectuée à chaque fois dans des composants qui sont conçus sous forme de systèmes sur puce.

10. Procédé selon la revendication 9,
**caractérisé en ce que** les composants, qui sont conçus sous forme de systèmes sur puce, forment une interface IOM-2 qui forme une partie de l'interface (21), conçue par exemple sous forme d'une interface d'interconnexion.
